# EUROPÄISCHE PATENTSCHRIFT

(11) **EP 3 933 222 B1**
(45) Veröffentlichungstag und Bekanntmachung des Hinweises auf die Patenterteilung: **27.11.2024**
(21) Anmeldenummer: 20183141.9
(22) Anmeldetag: 30.06.2020
(51) Int. Cl.: F16D 3/26, H02K 7/18, H02K 21/00, F16C 41/00

(54) **WELLE MIT INTEGRIERTEM GENERATOR**
SHAFT WITH INTEGRATED GENERATOR
ARBRE POURVU DE GÉNÉRATEUR INTÉGRÉ

(43) Veröffentlichungstag der Anmeldung: 05.01.2022
(73) Patentinhaber: Off-Highway Powertrain Services Germany GmbH, 53797 Lohmar (DE)
(72) Erfinder: Krüger, Max, 53797 Lohmar (DE); Kisla, Timur Mehmet, 53844 Troisdorf (DE); Mildenberger, Mike, 51105 Köln (DE)
(74) Vertreter: Grünecker Patent- und Rechtsanwälte PartG mbB

(56) Entgegenhaltungen:
- EP-A1- 2 843 359
- DE-A1- 102009 028 566
- DE-A1- 102010 038 654
- DE-B3- 102015 100 656
- JP-A- 2006 106 917
- JP-U- S5 697 632
- US-A1- 2014 188 353
- US-B2- 10 032 323

## Beschreibung

Die vorliegende Erfindung liegt auf dem Gebiet der Antriebstechnik.

Bei der Übertragung eines Drehmoments in einem Antrieb kommen drehbar gelagerte Wellen zum Einsatz. Mitunter sind diese Wellen als Gelenkwellen ausgebildet und/oder mit einem zusätzlichen Längenausgleich versehen, welcher auch als Schiebestück bezeichnet wird. Solche Wellen, die mit der vorliegenden Erfindung verbessert werden sollen, kommen auch zwischen Traktoren und davon gezogenen, geschobenen oder getragenen landwirtschaftlichen Arbeitsmaschinen zum Einsatz. Zwischen dem Traktor und der Arbeitsmaschine wird in der Regel eine Gelenkwelle mit zwei Kreuzgelenken und einer dazwischenliegenden, mehrteiligen Welle, die ein Wellenrohr sowie Segmente für den Längenausgleich verwirklicht, eingesetzt, um die Drehmoment-Übertragung davon unabhängig zu machen, welche Bewegung die Arbeitsmaschinen relativ zu dem Traktor bzw. der Zugmaschine ausführt.

Der vorliegenden Erfindung geht es allgemein um die Verbesserung von Wellen, vorzugsweise in einem Antriebsstrang, und insbesondere um die Verbesserung von Gelenkwellen, insbesondere der vorstehend beschriebenen Art.

Gemäß der vorliegenden Erfindung wird vorgeschlagen, die Welle mit einem Generator zu versehen. Dieser Generator erzeugt Strom, üblicherweise für die Stromversorgung der Welle selbst. Denn diese ist oft nicht nur ein Element zur Übertragung eines Drehmomentes; die Welle kann vielmehr mit zumindest einem Sensor versehen sein, der das Verhalten der Welle erfasst. Dieser Sensor kann ein Temperatursensor, ein Dehnungsmessstreifen, ein Beschleunigungs- oder ein Lagesensor sein, der die thermische, dynamische oder mechanische Beanspruchung der Welle überwacht. Solche Sensoren eignen sich für die frühe Erkennung von sich anbahnendem Verschleiß.

Aus der DE 101 28 208 A1 ist eine Vorrichtung zur Erzeugung elektrischer Energie aus der Drehbewegung einer Welle bekannt. Die Vorrichtung umfasst eine rotierbare Welle und einen Generator mit einer drehfest mit der Welle verbundenen Spule und einer Magnetanordnung, die die Spule konzentrisch umgibt und über Drehlager bezüglich der Spule drehbar gelagert ist. Durch eine Relativbewegung zwischen der Spule und der Magnetanordnung wird in an sich bekannter Weise eine Spannung in der Spule induziert. Die DE 101 28 208 A1 kann insofern als gattungsgemäß zum Gegenstand von Anspruch 1 angesehen werden.

DE 10 2015 100656 B3 und DE 10 2010 038654 A1 zeigen weitere aus dem Stand der Technik bekannte Vorrichtungen zur Erzeugung elektrischer Energie in einer Welle.

Die gattungsgemäße Vorrichtung birgt den Nachteil eines erhöhten Platzbedarfs sowie einer erhöhten Fliehkraft an der Welle. Des Weiteren ist die Vorrichtung insbesondere bei dem Einsatz an Gelenkwellen zwischen Traktoren und davon gezogenen, geschobenen oder getragenen landwirtschaftlichen Arbeitsmaschinen den äußeren Einflüssen, wie beispielsweise Staub oder Steinschlag, ausgeliefert.

Die vorliegende Erfindung will den genannten Nachteilen ganz oder teilweise abhelfen.

Zur Lösung dieser Aufgabenstellung gibt die vorliegende Erfindung eine Welle mit den Merkmalen von Anspruch 1 an.

Der Generator ist nach der vorliegenden Erfindung verdrehfest an einem Wellenkörper der Welle angeordnet. Diese Montage schließt die Möglichkeit einer Anordnung des Generators am Außenumfang des Wellenkörpers ein. Bevorzugt ist der Generator innerhalb eines Wellenkörpers der Welle angeordnet. Die Welle ist insofern mindestens mit einem Hohlraum zur Aufnahme des Generators versehen. Für gewöhnlich weist der den Generator in sich aufnehmende Wellenkörper ein Rohrstück auf oder ist als Rohr ausgebildet. In der Regel ist die Welle als Hohlwelle ausgebildet. Der Generator nach der vorliegenden Erfindung ist üblicherweise ein solcher Generator, der für sich und allein durch Anordnung in der drehenden Welle funktionsfähig ist. Dies bedeutet, dass üblicherweise keine Funktionselemente des Generators vorgesehen sind, die nicht zusammen mit der Welle verwirklicht sind.

Nach der vorliegenden Erfindung ist das Primärteil des Generators innerhalb des Sekundärteils des Generators angeordnet und entlang einer Längserstreckungsrichtung des Sekundärteils beweglich. Dabei wird in dem Generator auf an sich bekannte Weise durch eine Relativbewegung zwischen dem Primär- und dem Sekundärteil ein Strom induziert. Die Längserstreckungsrichtung des Sekundärteils ist mit einem radialen Abstand zu einer Längsachse, üblicherweise der Mittellängsachse, des Wellenkörpers angeordnet. In der Regel verläuft die Längserstreckungsrichtung des Sekundärteils in Drehrichtung, also in Umfangsrichtung der Welle. Das Primärteil, das innerhalb des Sekundärteils angeordnet ist, ist in der Regel derart ausgebildet, dass es aufgrund des radialen Abstandes zur Mittellängsachse des Wellenkörpers und der Trägheit seiner Masse durch eine Drehung, Rotation, Schwingung oder Vibration der Welle relativ zu dem Sekundärteil und entlang der Längserstreckungsrichtung des Sekundärteils bewegbar ist.

Durch die Integration des Generators innerhalb des Wellenkörpers der Welle kann einerseits ein erhöhter Platzbedarf vermieden werden. Andererseits bietet die Welle gleichsam ein Schutzgehäuse für den Generator und die im Betrieb angreifenden Lasten (z.B. Fliehkräfte und Beschleunigung) werden reduziert.

Der Wellenkörper der Welle kann insbesondere an einem Zapfenkreuz einer Gelenkwelle angeschlossen sein. Das Zapfenkreuz einer Gelenkwelle hat üblicherweise vier Zapfen, die jeweils rechtwinklig zueinander üblicherweise in einer Ebene angeordnet sind. An sich gegenüberliegenden Zapfen ist jeweils ein Wellenkörper verdrehfest, jedoch gelenkig verbunden. Dadurch besteht die Möglichkeit, zwischen den beiden Wellenkörpern ein Drehmoment zu übertragen und gleichzeitig eine gewisse winkelige Lage der beiden Wellenkörper relativ zueinander zuzulassen.

Nach einer bevorzugten Weiterbildung der vorliegenden Erfindung erstrecken sich das Primärteil und das Sekundärteil des Generators in einer Querschnittansicht des Wellenkörpers im Bereich eines äußeren Mantels des Wellenkörpers in einer zu einer Radialrichtung tangentialen Umfangsrichtung. Die Längserstreckungsrichtung entspricht hierbei der Umfangsrichtung der Welle. Durch diese Anordnung erfährt der Generator bei einer Drehung der Welle eine Tangentialbeschleunigung, die zur Anregung einer Relativbewegung zwischen Primärteil und Sekundärteil ausgenutzt wird.

Erfindungsgemäß weist das Sekundärteil eine verdrehfest mit dem Wellenkörper verbundene gebogene Spule und das Primärteil einen federnd gelagerten und innerhalb der Spule in Umfangsrichtung des Wellenkörpers auslenkbaren Magneten auf. Weiter bevorzugt sind die einzelnen Windungen der Spule exzentrisch in dem Wellenkörper angeordnet. Insbesondere ist ein Windungsdurchmesser kleiner als ein Innendurchmesser des Wellenkörpers.

Die Windungen der Spule können beispielsweise an der Innenseite des Mantels der Welle befestigt sein. Dabei ist die Längserstreckungsrichtung der Spule in der Regel konzentrisch zu den Windungen definiert. Sie ist erfindungsgemäß gebogen und beschreibt eine Bahn - für gewöhnlich entlang bzw. entgegen der Drehrichtung der Welle - um die Mittellängsachse des Wellenkörpers. Diese Bahn muss nicht geschlossen sein. Sie kann insbesondere die Form eines Kreisbogens um die Mittellängsachse des Wellenkörpers annehmen. Die Form der Bahn schränkt in der Regel die Querschnittsform des Wellenkörpers nicht ein, die eine aus dem Stand der Technik bekannte Querschnittsform sein kann, beispielsweise kreisförmig, oval bzw. zitronenförmig, quadratisch oder sternförmig.

Der Magnet ist vorzugsweise ein Permanentmagnet und kann beispielsweise auf einem entlang der durch die Spule vorgegebenen Bahn gebogenen Träger des Primärteils vorgesehen sein, der von den Windungen der Spule umgeben ist. Der Träger ist üblicherweise über zumindest eine sich in radialer Richtung erstreckende Blattfeder mit einem üblicherweise in der radialen Mitte des Wellenkörpers vorgesehenen Steg verbunden. Dieser Steg ist verdrehfest mit dem Wellenkörper verbunden. Der Steg kann sich ausgehend von der radialen Mitte des Wellenkörpers plattenförmig erstrecken und eine Breite haben, die dem Innendurchmesser des Wellenkörpers entspricht, sodass der Steg den Wellenkörper auf einem gewissen Längsabschnitt in zwei Hälften unterteilt. Der Steg kann auch als konzentrisch zur Längsachse des Wellenköpers angeordneter Stab ausgebildet sein, der sich radial erstreckende und ggf. in Längsrichtung zu dem Generator versetzt vorgesehene Befestigungsarme zur Befestigung an dem Innenumfang des Wellenkörpers aufweist. Die Blattfedern können bei der bevorzugten Anordnung des Generators innerhalb des Wellenkörpers an einem konzentrisch zu dem Wellenkörper angeordneten und mit einem rohrförmigen Wellenkörper verbundenen Topf versehen sein.

Der Magnet ist vorzugsweise ein Permanentmagnet und kann aus mehreren Segmenten zusammengesetzt sein, die beispielsweise auf einer gebogenen Gewindestange als Träger, insbesondere Nylon-Gewindestange, nach Art einer Perlenkette aneinandergereiht und auf die Gewindestange aufgeschraubt sind. Vorzugsweise definiert der Träger mit zwei an seinen gegenüberliegenden Enden vorgesehenen Federn einen Kreissektor mit dem Befestigungspunt an dem Steg im Mittelpunkt des zugehörigen Kreises.

Nach einer weiteren bevorzugten Weiterbildung der vorliegenden Erfindung erstreckt sich der Generator in der Querschnittansicht des Wellenkörpers im Wesentlichen über den gesamten Umfang des Wellenkörpers. D.h. das Primärteil, insbesondere der Träger des Primärteils, und/oder das Sekundärteil haben eine in Umfangsrichtung im Wesentlichen geschlossene Form, üblicherweise die Form eines Rings. Dadurch kann der gesamte Umfang des Wellenkörpers zur Induzierung eines Stroms genutzt werden. Diese bevorzugte Weiterbildung eignet sich insbesondere zum Einsatz in einer Gelenkwelle, da das Primärteil selbst bei gleichmäßiger Gewichtsverteilung durch den Kardaneffekt der Gelenkwelle angeregt wird.

Nach einer weiteren bevorzugten Weiterbildung der vorliegenden Erfindung sind in der Welle mehrere Generatoren vorgesehen, die wie voranstehend beschrieben ausgestaltet sein können. In der Regel ist je einem Generator ein Träger zugeordnet. Die Generatoren können beispielsweise in Längsrichtung der Welle versetzt zueinander angeordnet sein. Insbesondere können die Generatoren aber auch an derselben Längsposition in der Welle und an unterschiedlichen Positionen in Umfangsrichtung der Welle vorgesehen sein. Besonders bevorzugt kann in der Querschnittansicht des Wellenkörpers in je einer Hälfte des Wellenkörpers mindestens ein Generator vorgesehen sein. Primärteil und Sekundärteil sind in diesem Fall entlang eines Kreisbogens angeordnet, wobei die Länge des Kreisbogens einem Halbkreis oder weniger entspricht.

Das Primärteil der Generatoren stellt aufgrund der gefederten Lagerung und der Trägheit seiner Masse ein schwingungsfähiges System dar, das durch Drehung, Rotation, Schwingung oder Vibration der Welle angeregt werden kann. Jedes dieser schwingungsfähigen Systeme hat in der Regel eine Eigenfrequenz, die von der effektiven Masse des Primärteils, der Gesamtsteifigkeit der Federn sowie von der Dämpfung durch Luftreibung und Rückwirkung durch die Lorentzkraft abhängt. Die Eigenfrequenzen der Primärteile der Generatoren können voneinander unterschiedlich sein und jeweils einer bestimmten Drehzahl der Welle zugeordnet sein. Sie können aber auch gleich sein. Die Abstimmung der Eigenfrequenzen kann dabei mit dem Ziel erfolgen, die Leistung des Generators zu verdoppeln oder über das Drehzahlband zu verteilen.

In der Regel werden die mit der vorliegenden Erfindung in den Blick genommenen Wellen in im Wesentlichen horizontaler Lage betrieben, d.h. die Erdanziehungskraft steht für gewöhnlich im Wesentlichen senkrecht zur Drehachse der Welle. Das Primärteil des Generators vollführt daher durch eine Rotation der Welle eine periodische Bewegung pro Umdrehung aufgrund der Erdanziehungskraft und der Massenträgheit. Bei einer Gelenkwelle kommt zusätzlich der Kardaneffekt hinzu. Dabei führt die ungleichförmige Anordnung der Wellenkörper zu einer Anregung des Primärteils mit doppelter Drehfrequenz, d.h. das Primärteil vollführt zwei periodische Bewegungen pro Umdrehung. Aufgrund der drehzahl- und beugewinkelabhängigen Amplitude und der im Vergleich zur Drehfrequenz doppelten Erregerfrequenz, bietet die Nutzung des Kardaneffekts ein hohes Leistungspotential.

Nach einer weiteren bevorzugten Weiterbildung ist der Generator mit einer Logikeinheit gekoppelt, die die elektrische Leistung des Generators zur Bestimmung eines Betriebsparameters der drehbar gelagerten Welle auswertet. Der Generator nimmt bei dieser bevorzugten Weiterbildung zusätzlich zur energieerzeugenden Funktion auch die Funktion eines Sensors ein. Die Logik kann in der Nähe des Generators in die Welle integriert sein. Dabei kann beispielsweise durch Abgleich zwischen dem Wert der elektrischen Leistung und einer Auswertetabelle festgestellt werden, mit welcher Drehzahl die Welle betrieben wird. Dabei kann ungeachtet der speziellen Ausprägung des Generators die erzeugte Energie, in Form von Amplitude und Frequenz, des Generators zur Analyse der Drehbewegung der Welle genutzt werden. Auch kann durch Analyse der elektrischen Leistung das Betriebsverhalten der Welle analysiert werden. Dabei kann ein planmäßiges Betriebsverhalten analysiert werden, um beispielsweise die Drehzahl der Welle oder den Beugewinkel im Falle einer Gelenkwelle zu ermitteln. Ebenso gut können Störungen im Betriebsverhalten analysiert werden, wie beispielsweise eine Fehlausrichtung oder ein Fehlbetrieb der Welle. Auch ist es möglich, die von dem Generator erzeugte Energie zu nutzen, um auf den Kardanfehler zu schließen und mit diesem den Beugewinkel der Einbaulage betragsmäßig zu ermitteln.

Die Logik kann aber vielmehr auch genutzt werden, um den Kardanfehler der Gelenkwelle bzw. die Winkellage zwischen den beiden Wellenkörpern der Gelenkwelle auszuwerten und sich abzeichnende Funktionsstörungen zu ermitteln. Weiter bevorzugt wird die zur Ausführung der Logik benötigte elektrische Energie durch den Generator bereitgestellt.

Bevorzugt speist der Generator eine Sendeeinrichtung mit Strom, die ausgewertete Daten der Logik drahtlos an einen extern vorgesehenen Empfänger übermittelt, der in der Regel mit einem Ausgabegerät zur Darstellung der Daten verbunden ist. Die übermittelten Daten können außerhalb der Welle beispielsweise an einem Steuer- oder Bedienstand einer die Welle aufweisenden Vorrichtung, beispielsweise einem landwirtschaftlichen Zugfahrzeug, angezeigt werden. Damit ist es möglich, eine fehlerhafte Einstellung der Welle zu analysieren und ggf. zu korrigieren. Ungleiche Beugewinkel an beiden Enden einer Gelenkwelle, die zu einer übermäßigen Beanspruchung der Gelenkwelle im Betrieb führen können, können durch Anpassung der Lage der beiden, an beiden Enden der Gelenkwelle vorgesehenen Antriebselemente korrigiert werden. So kann beispielsweise ein über die Gelenkwelle angetriebenes landwirtschaftliches Gerät im Hinblick auf ein schonendes Betriebsverhalten der Gelenkwelle optimiert relativ zu dem landwirtschaftlichen Zugfahrzeug, dessen Zapfwelle mit der Gelenkwelle verbunden sein kann, ausgerichtet werden. Aber auch andere Verwendungen sind denkbar. So kann das Ausgabegerät vorzugsweise einen sich anbahnenden Verschleiß der Welle signalisieren und damit notwendige Wartungsarbeiten anzeigen.

Aus Gründen einer einfachen Montage ist der Generator vorzugsweise in einem Gehäuse vorgesehen, das in einen Hohlraum der drehbar gelagerten Welle eingeführt, vorzugsweise eingepresst oder eingeklebt ist. Das Gehäuse weist in der Regel eine Hülse auf, die eine an die Kontur der Welle, welchen den Hohlraum nach außen begrenzt, angepasste Mantelfläche hat.

An der Innenseite dieser Mantelfläche sind für gewöhnlich die Windungen der Spule verdrehfest befestigt. Üblicherweise hat das Gehäuse des Weiteren eine konzentrisch in der Hülse angeordnete und verdrehfest mit derselben verbundene Trägerbasis mit einem entlang der Mittellängsachse der Welle bzw. des Gehäuses verlaufenden Steg. Die Trägerbasis kann beispielsweise hantelförmig sein, wobei der Steg zwei gegenüber dem Steg breitere Enden der Trägerbasis miteinander verbindet, welche wiederum mit der Hülse verbunden sind oder einteilig mit derselben hergestellt sind. Die Hülse und die Trägerbasis können insgesamt einteilig hergestellt sein. An dem Steg ist vorzugsweise in der obig beschriebenen Art und Weise das Primärteil des Generators mittels mindestens einer sich in radialer Richtung erstreckenden Feder befestigt. Das Gehäuse mit dem verdrehfest darin vorgesehenen Generator kann für sich erfindungswesentlich sein.

In einem verfahrensmäßigen Aspekt gibt die vorliegende Erfindung ein Verfahren zum Betrieb einer drehbar gelagerten Welle mit einem Wellenkörper und einem verdrehfest in dem Wellenkörper vorgesehenen Generator an, wobei sich ein Primärteil des Generators relativ zu einem Sekundärteil des Generators bewegt und in einer zu einer Radialrichtung tangentialen Umfangsrichtung des Wellenkörpers hin- und herschwingt, wenn sich die Welle dreht oder vibriert. Das Primärteil und das Sekundärteil können wie zuvor beschrieben ausgestaltet sein. Das Primärteil ist vorzugsweise in Drehrichtung und entgegen der Drehrichtung der Welle durch jeweils ein biegeelastisches Bauteil schwingungsfähig gelagert. Das Sekundärteil ist hingegen fest mit dem Wellenkörper verbunden. Daher wird das Primärteil durch eine Drehung oder eine Vibration der Welle zu einer Schwingung angeregt, die aufgrund der gefederten Lagerung des Primärteils eine periodische Bewegung in und entgegen der Drehrichtung der Welle beinhaltet. Eine an der Welle angreifende Tangentialbeschleunigung wird so zur Anregung einer Relativbewegung zwischen dem Primärteil und dem Sekundärteil genutzt, wodurch ein elektrischer Strom induziert wird.

Die Welle wird vorzugsweise mit einer Drehzahl rotiert, die das Primärteil in einer Eigenfrequenz seiner Schwingung anregt. So lässt sich der Generator in einem resonanten Bereich und damit mit hoher Effizienz anregen. Weiter bevorzugt wird die Welle, sofern sie eine Gelenkwelle ist, so konzipiert, dass das Primärteil durch einen Kardaneffekt der Gelenkwelle in seiner Eigenfrequenz angeregt wird. Die Eigenfrequenz ist dabei üblicherweise durch geeignete Wahl der sie beeinflussenden Parameter auf diejenige Drehzahl angepasst, mit der die Gelenkwelle für gewöhnlich im normalen Betriebsablauf betrieben wird. Diese Drehzahl liegt meist innerhalb eines weiten Drehzahlbereichs. So sind besonders bevorzugt mehrere Generatoren mit unterschiedlichen Eigenfrequenzen vorgesehen, sodass ein weiter Bereich an Drehzahlen von 50 U/min bis 6000 U/min, bevorzugt von 500 U/min bis 1000 U/min abgedeckt werden kann.

Wird eine Gelenkwelle mit einer festen Drehzahl betrieben, schlägt die vorliegende Erfindung zur Leistungsmaximierung die Integration eines umfänglich geschlossenen Generators vor, dessen Eigenfrequenz auf die feste Drehzahl bzw. den damit einhergehenden Kardaneffekt abgestimmt ist.

Vorzugsweise ist der Generator mit einer Logik gekoppelt, welche die elektrische Leistung des Generators zur Bestimmung eines Betriebsparameters der drehbar gelagerten Welle auswertet. Weiter bevorzugt kommuniziert die Logik mit einer Steuerung, die steuerungsmäßig mit einem an oder in der Welle vorgesehenen Sensor gekoppelt ist, der durch den Generator bestromt wird. Dabei ist die Steuerung bevorzugt derart angepasst eingerichtet, dass der Sensor in Abhängigkeit mindestens eines Betriebsparameters ein- und/oder ausgeschaltet wird. Dadurch lässt sich eine Messung des Sensors auf relevante Betriebsbedingungen einschränken und ggf. Strom sparen.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Fig. 1: eine schematische Darstellung einer Querschnittansicht einer drehbar gelagerten Welle eines ersten Ausführungsbeispiels, und
- Fig. 2: eine schematische Darstellung einer Querschnittansicht einer drehbar gelagerten Welle eines zweiten Ausführungsbeispiels.

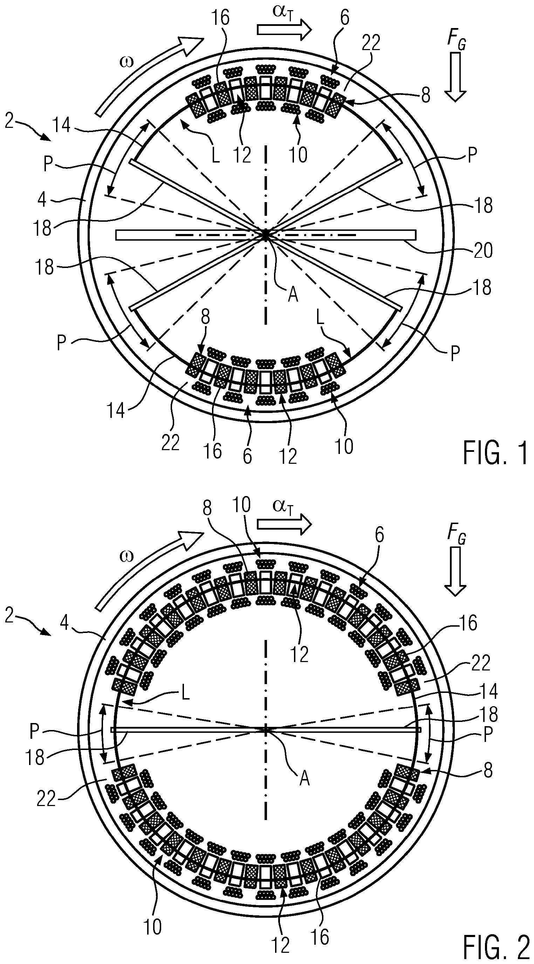

Die Figuren 1 und 2 stellen Ausführungsbeispiele schematisch und in einer Querschnittansicht dar. Die drehbar gelagerte Welle ist in diesen Ausführungsbeispielen als Hohlwelle mit einem Wellenkörper 2, der einen zylindrischen Mantel 4 hat, ausgebildet. Sie ist in horizontaler Lage vorgesehen; d.h. die Welle erstreckt sich axial in der Horizontalen. Entsprechend ist die Gewichtskraft F_{G} mit einem nach unten gerichteten Pfeil dargestellt. Der Wellenkörper 2 ist um seine Mittellängsachse A drehbar. Sie wird nachfolgend Drehachse A genannt.

Bei einer Rotation der Welle um die Drehachse A mit einer Winkelgeschwindigkeit ω, die in Umfangsrichtung des Wellenkörpers 2 zeigt, erfährt ein Massenpunkt auf dem Mantel 4 eine Tangentialbeschleunigung α_{T}, die betragsmäßig das Produkt aus dem Abstand des Massenpunkts von der Drehachse A und der zeitlichen Ableitung der Winkelgeschwindigkeit ω ist. Die Tangentialbeschleunigung α_{T} steht senkrecht zur Radialrichtung, die von der Mantelfläche des Mantels 4 in Richtung der Drehachse A zeigt.

Bei dem in Figur 1 dargestellten Ausführungsbeispiel sind zwei Generatoren 6 vorgesehen, wobei einer der Generatoren 6 in der oberen Hälfte des Wellenkörpers 2 und der andere Generator 6 in der unteren Hälfte des Wellenkörpers 2 vorgesehen ist. Der Generator 6 hat ein Primärteil 8 und ein Sekundärteil 10, wobei das Primärteil 8 einen Permanentmagneten 12 aufweist, der an einer gebogenen Nylonstange als Träger 14 befestigt ist. Der Träger 14 erstreckt sich entlang der Längserstreckungsrichtung L des Sekundärteils 10.

Der Permanentmagnet 12 setzt sich aus einzelnen ringförmigen Segmenten 16 zusammen, die abwechselnd mit unterschiedlicher Polarität auf der Nylonstange aneinandergereiht sind. Der Träger 14 ist an seinen Enden mit je einer Blattfeder 18 gekoppelt, die sich in radialer Richtung erstreckt und an der Drehachse A mit einem Steg 20 einer Trägerbasis verbunden ist. Die Trägerbasis ist verdrehfest mit dem Mantel 4 des Wellenkörpers 2 verbunden. Die Trägerbasis und/oder der Träger 14 sollten aus dem gleichen Werkstoff, insbesondere Stahl gebildet sein. Nicht-magnetischer Stahl, beispielsweise austenitischer Stahl oder Aluminium sind zur Vermeidung einer magnetischen Wechselwirkung zu dem Primär- bzw. Sekundärteil 10, 12 zu bevorzugen.

Das Primärteil 8 ist aufgrund der Biegeelastizität der Blattfedern 18 und der Trägheit seiner Masse ein schwingungsfähiges System, das durch eine Rotation der Welle angeregt werden kann. Das heißt, dass das Primärteil 8 in eine oszillierende Bewegung versetzt werden kann, die sich aus einer in Richtung der Drehrichtung der Welle und einer entgegen der Drehrichtung der Welle geführten Bewegung zusammensetzt. So entsteht eine Relativbewegung zwischen dem Primärteil 8 und dem Sekundärteil 10, das eine fest mit dem Mantel 4 des Wellenkörpers 2 verbundene Spule 22 aufweist. Die Spule 22 ist konzentrisch um den Träger 14 gewunden. Die in Umfangsrichtung äußeren Windungen der Spule 22 sind an dem Mantel 4 befestigt.

Die Auslenkungsamplitude des Primärteils 8 in Umfangsrichtung entspricht vorliegend der Hälfte des Doppelpfeils P. Bevorzugt sind die Eigenfrequenzen der Primärteile 8 der Generatoren 6 unterschiedlich.

Das in Figur 2 dargestellte zweite Ausführungsbeispiel unterscheidet sich von dem ersten Ausführungsbeispiel dadurch, dass nur eine Nylonstange als Träger 14 vorgesehen ist, die zu einem im Wesentlichen umfänglich geschlossenen Ring gebogen ist, und dass sich die Permanentmagneten 12 und die Spulen 22 in Umfangsrichtung nahezu über die Hälfte des Mantels 4 erstrecken. Nylon ist lediglich ein beispielhafter Werkstoff zur Herstellung des Trägers. Dieser Träger sollte aus einem unmagnetischen und biegsamen Material gebildet sein. Die Ausbildung des Trägers 15 als Gewindestange dient der axialen Fixierung und Vorspannung der einzelnen ringförmigen Segmenten 16 auf dem Träger 14. Die Blattfedern 18 sind gegenüberliegend und entlang einer Linie angeordnet, welche den Wellenkörper 2 in eine obere und eine untere Hälfte unterteilt. Alternativ können zur Erhöhung der Quersteifigkeit des Primärteils auch mehr als zwei Blattfedern beispielsweise drei bis fünf Blattfedern sternförmig angeordnet werden. Ein umfänglicher Spalt zwischen der oberen und der unteren Spule 22 ist geradeso gewählt, dass die Blattfedern 18 bei einer Auslenkung des Primärteils 8 die Spulen 22 nicht berühren.

### Bezugszeichenliste

- 2: Wellenkörper
- 4: Mantel
- 6: Generator
- 8: Primärteil
- 10: Sekundärteil
- 12: Permanentmagnet
- 14: Träger
- 16: ringförmiges Segment
- 18: Blattfeder
- 20: Steg der Trägerbasis
- 22: Spule
- A: Drehachse der Welle
- L: Längserstreckungsrichtung des Sekundärteils
- P: doppelte Auslenkungsamplitude
- F_{G}: Gewichtskraft
- ω: Winkelgeschwindigkeit
- α_{T}: Tangentialbeschleunigung

## Patentansprüche

1. Welle mit einem Wellenkörper (2) und einem Generator (6), der ein Sekundärteil (10) mit einer Spule (22) und ein innerhalb des Sekundärteils (10) angeordnetes und relativ zu dem Sekundärteil (10) bewegliches Primärteil (8) mit einem Magneten (12) aufweist, **dadurch gekennzeichnet, dass** der Generator (6) verdrehfest an dem Wellenkörper (2) vorgesehenen und die Spule (22) verdrehfest mit dem Wellenkörper (2) verbunden ist und dass der Magnet (12) entlang einer gebogenen Längserstreckungsrichtung (L) der Spule (22) beweglich und in Umfangsrichtung des Wellenkörpers (2) auslenkbar ist, wobei die gebogene Längserstreckungsrichtung (L) einen radialen Abstand zu einer Längsachse (A) des Wellenkörpers (2) aufweist.

2. Welle nach Anspruch 1, **dadurch gekennzeichnet, dass** sich das Primär- und das Sekundärteil (8, 10) in einer Querschnittansicht des Wellenkörpers (2) im Bereich eines äußeren Mantels (4) des Wellenkörpers (2) in einer zu einer Radialrichtung tangentialen Umfangsrichtung erstrecken.

3. Welle nach Anspruch 1 oder 2, **dadurch gekennzeichnet, dass** Windungen der Spule (22) exzentrisch in dem Wellenkörper (2) angeordnet sind.

4. Welle nach einem der vorherigen Ansprüche, **dadurch gekennzeichnet, dass** sich der Generator (6) im Wesentlichen über den gesamten Umfang des Wellenkörpers (2) in der Querschnittansicht erstreckt.

5. Welle nach einem der vorherigen Ansprüche, **dadurch gekennzeichnet, dass** mehrere Generatoren (6) vorgesehen sind, die jeweils ein Primärteil (8) mit einer Eigenfrequenz aufweisen.

6. Welle nach Anspruch 5, **dadurch gekennzeichnet, dass** in einer Querschnittansicht des Wellenkörpers (2) in je einer Hälfte des Wellenkörpers (2) mindestens ein Generator (6) vorgesehen ist.

7. Welle nach einem der vorherigen Ansprüche, **gekennzeichnet durch** eine die elektrische Leistung des Generators (6) zur Bestimmung eines Betriebsparameters der drehbar gelagerten Welle auswertende Logik.

8. Welle nach einem der vorherigen Ansprüche, **dadurch gekennzeichnet, dass** der Generator (6) in baulicher Einheit mit einer in den Wellenkörper (2) eingeführten, bevorzugt zylindrischen Hülse vorgesehen ist.

9. Antriebsstrang eines Fahrzeugs, **gekennzeichnet durch** eine Welle nach einem der vorherigen Ansprüche.

10. Verfahren zum Betrieb einer Welle nach einem der vorherigen Ansprüche mit einem Wellenkörper (2) und einem verdrehfest an dem Wellenkörper (2) vorgesehenen Generator (6), wobei sich ein Primärteil (8) des Generators (6) relativ zu einem Sekundärteil (10) des Generators (6) bewegt und in einer zu einer Radialrichtung tangentialen Umfangsrichtung des Wellenkörpers (2) hin- und herschwingt, wenn sich die Welle dreht oder vibriert.

11. Verfahren nach Anspruch 10, **dadurch gekennzeichnet, dass** das Primärteil (8) durch Rotation der Welle in seiner Eigenfrequenz angeregt wird.

12. Verfahren nach Anspruch 10 oder 11, **dadurch gekennzeichnet, dass** die Welle eine Gelenkwelle ist und das Primärteil (8) durch einen Kardaneffekt der Gelenkwelle in seiner Eigenfrequenz angeregt wird.

13. Verfahren nach einem der Ansprüche 10 bis 12, **dadurch gekennzeichnet, dass** ein an oder in dem Wellenkörper (2) vorgesehener und von dem Generator (6) bestromter Sensor in Abhängigkeit eines Betriebsparameters der Welle ein- oder ausgeschaltet wird, der von einer mit dem Generator (6) gekoppelten Logik durch Auswertung der elektrischen Leistung des Generators (6) bestimmt wird.

## Claims

1. A shaft comprising a shaft body (2) and a generator (6) including a secondary part (10) having a coil (22) and a primary part (8) having a magnet (12) arranged within the secondary part (10) and movable relative to the secondary part (10) **characterized in that** the generator (6) is provided non-rotatably on the shaft body (2) and the coil (22) is non-rotatably coupled to the shaft body (2) and **in that** the magnet (12) is movable along a curved longitudinal extension (L) of the coil (22) and deflectable in the circumferential direction of the shaft body (2), wherein the curved longitudinal extension (L) is radially spaced from a longitudinal axis (A) of the shaft body (2).

2. The shaft according to claim 1, **characterized in that** the primary and secondary parts (8, 10) extend in the region of the outer wall (4) of the shaft body (2) in a circumferential direction tangent to a radial direction in a cross-sectional view of the shaft body (2).

3. The shaft according to claims 1 or 2, **characterized in that** turns of the coil (22) are arranged eccentrically within the shaft body (2).

4. The shaft according to any one of the preceding claims, **characterized in that** the generator (6) extends substantially across the entire circumference of the shaft body (2) in the cross-sectional view.

5. The shaft according to any one of the preceding claims, **characterized in that** a plurality of generators (6) are provided each including a primary part (8) having a natural frequency.

6. The shaft according to claim 5, **characterized in that** in a cross-sectional view of the shaft body (2) at least one generator (6) is provided in each of the halves of the shaft body (2).

7. The shaft according to any one of the preceding claims, **characterized by** a logic for evaluating an electric power of the generator (6) to determine an operating parameter of the rotatably supported shaft.

8. The shaft according to any one of the preceding claims, **characterized in that** the generator (6) is structurally integral with a preferably cylindrical sleeve inserted into the shaft body (2).

9. A drive train of a vehicle **characterized by** a shaft according to any one of the preceding claims.

10. A method for operating a shaft according to anyone of the preceding claims, comprising a shaft body (2) and a generator (6) non-rotatably provided on the shaft body (2), wherein a primary part (8) of the generator (6) is movable relative to a secondary part (10) of the generator (6) and oscillates in a circumferential direction of the shaft body (2) tangent to a radial direction, when the shaft rotates and vibrates.

11. The method according to claim 10, **characterized in that** the primary part (8) is excited in its natural frequency by rotation of the shaft.

12. The method according to claims 10 or 11, **characterised in that** the shaft is a jointed shaft and the primary part (8) is excited in its natural frequency by a cardan effect of the jointed shaft.

13. The method according to any one of claims 10 to 12, **characterized in that** a sensor provided on or in the shaft body (2) and energized by the generator (6) is switched on and off as a function of an operating parameter of the shaft which is determined by a logic coupled to the generator (6) by evaluating the electric power of the generator (6).

## Revendications

1. Arbre, comprenant un corps d'arbre (2) et un générateur (6) présentant une partie secondaire (10) munie d'une bobine (22) et une partie primaire (8) agencée à l'intérieur de la partie secondaire (10) et mobile par rapport à la partie secondaire (10) et munie d'un aimant (12), **caractérisé en ce que** le générateur (6) est fourni au niveau du corps d'arbre (2) de manière à être solidaire en rotation et la bobine (22) est reliée de manière solidaire en rotation au corps d'arbre (2) et **en ce que** l'aimant (12) est mobile le long d'une direction d'extension longitudinale (L) courbée de la bobine (22) et peut être dévié dans la direction circonférentielle du corps d'arbre (2), dans lequel la direction d'extension longitudinale (L) courbée présente un espacement radial par rapport à un axe longitudinal (A) du corps d'arbre (2).

2. Arbre selon la revendication 1, **caractérisé en ce que** les parties primaire et secondaire (8, 10) s'étendent dans une direction circonférentielle tangentielle à une direction radiale dans la région d'une enveloppe extérieure (4) du corps d'arbre (2) selon une vue en coupe transversale du corps d'arbre (2).

3. Arbre selon la revendication 1 ou 2, **caractérisé en ce que** des spires de la bobine (22) sont agencées de manière excentrée dans le corps d'arbre (2).

4. Arbre selon l'une quelconque des revendications précédentes, **caractérisé en ce que** le générateur (6) s'étend essentiellement sur toute la circonférence du corps d'arbre (2) selon une vue en coupe transversale.

5. Arbre selon l'une quelconque des revendications précédentes, **caractérisé en ce que** plusieurs générateurs (6) sont fournis, qui présentent respectivement une partie primaire (8) avec une fréquence propre.

6. Arbre selon la revendication 5, **caractérisé en ce qu'au** moins un générateur (6) est fourni dans chaque moitié du corps d'arbre (2) selon une vue en coupe transversale du corps d'arbre (2).

7. Arbre selon l'une quelconque des revendications précédentes, **caractérisé par** un circuit logique évaluant la puissance électrique du générateur (6) afin de déterminer un paramètre de fonctionnement de l'arbre monté rotatif.

8. Arbre selon l'une quelconque des revendications précédentes, **caractérisé en ce que** le générateur (6) est fourni au sein d'une unité de construction comprenant une douille, de manière préférée cylindrique, introduite dans le corps d'arbre (2).

9. Groupe motopropulseur d'un véhicule, **caractérisé par** un arbre selon l'une quelconque des revendications précédentes.

10. Procédé de fonctionnement d'un arbre selon l'une quelconque des revendications précédentes comprenant un corps d'arbre (2) et un générateur (6) fourni au niveau du corps d'arbre (2) de manière à être solidaire en rotation, dans lequel une partie primaire (8) du générateur (6) se déplace par rapport à une partie secondaire (10) du générateur (6) et oscille avec un mouvement de va-et-vient dans une direction circonférentielle du corps d'arbre (2) tangentielle à une direction radiale lorsque l'arbre tourne ou vibre.

11. Procédé selon la revendication 10, **caractérisé en ce que** la pièce primaire (8) est excitée à sa fréquence propre par la rotation de l'arbre.

12. Procédé selon la revendication 10 ou 11, **caractérisé en ce que** l'arbre est un arbre de transmission et la partie primaire (8) est excitée à sa fréquence propre par un effet de cardan de l'arbre de transmission.

13. Procédé selon l'une quelconque des revendications 10 à 12, **caractérisé en ce qu'**un capteur fourni sur ou dans le corps d'arbre (2) et alimenté par le générateur (6) est activé ou désactivé en fonction d'un paramètre de fonctionnement de l'arbre qui est déterminé grâce à une évaluation de la puissance électrique du générateur (6) par un circuit logique couplé au générateur (6).
